# EUROPÄISCHE PATENTSCHRIFT

(11) **EP 1 756 201 B1**
(45) Veröffentlichungstag und Bekanntmachung des Hinweises auf die Patenterteilung: **23.09.2009**
(21) Anmeldenummer: 05748039.4
(22) Anmeldetag: 02.05.2005
(51) Int. Cl.: C08G 77/60, C04B 35/571, C01B 31/36

(54) **POLYSILAN-POLYCARBOSILAN-COPOLYMER-LÖSUNGEN UND DARAUS HERGESTELLTE SAUERSTOFFARME KERAMISCHE FORMKÖRPER MIT ZUSAMMENSETZUNGEN NAHE SIC**
POLYSILANE-POLYCARBOSILANE COPOLYMER SOLUTIONS AND OXYGEN-DEPLETED CERAMIC MOULDED BODIES WITH A COMPOSITION SIMILAR TO THAT OF SIC
SOLUTIONS DE COPOLYMERE POLYSILANE-POLYCARBOSILANE ET CORPS MOULES CERAMIQUES PAUVRES EN OXYGENE, REALISES A PARTIR DE CES SOLUTIONS, AYANT DES COMPOSITIONS PROCHES DE SIC

(30) Priorität: 03.05.2004 DE 102004021666; 02.09.2004 DE 102004042531
(43) Veröffentlichungstag der Anmeldung: 28.02.2007
(73) Patentinhaber: Fraunhofer-Gesellschaft zur Förderung der angewandten Forschung e.V., 80686 München (DE)
(72) Erfinder: CLADE, Jürgen, 97084 Würzburg (DE); SEIDER, Erich, 97222 Rimpar (DE); SPORN, Dieter, 31787 Hameln (DE); MEINHOLD, Dorit, 01109 Dresden (DE); ROEWER, Gerhard, 09599 Freiberg (DE); LANGE, Thomas, 09117 Chemnitz (DE); BRENDLER, Erika, 09599 Freiberg (DE)
(86) Internationale Anmeldenummer: PCT/EP2005/004754
(87) Internationale Veröffentlichungsnummer: WO 2005/108470

(56) Entgegenhaltungen:
- EP-A- 0 610 809
- EP-A- 0 668 254
- US-A- 4 414 403
- US-A- 5 082 872

## Beschreibung

### 1. Hintergrund

Die Erfindung betrifft Lösungen von Polysilan-Polycarbosilan-Copolymeren, die durch gezielte thermische Behandlung aus Methylchlorpolysilanen hergestellt und schwer- bzw. unschmelzbar gemacht wurden, in indifferenten organischen Lösemitteln. Die Erfindung betrifft auch sauerstoffarme keramische Formkörper, insbesondere Fasern, die aus diesen Lösungen erhältlich sind und eine Zusammensetzung nahe SiC aufweisen, sowie aus diesen Lösungen erhältliche sauerstoffarme keramische Matrices mit einer Zusammensetzung nahe SiC.

Siliciumcarbid-Werkstoffe sind für ihre mechanischen Festigkeiten bei hohen Temperaturen sowie ihre gute Oxidationsbeständigkeit bekannt. Daher kommen sie für eine Vielzahl von Verwendungszwecken in Frage, vor allem in Form von Fasern als Verstärkungselemente in Bauteilen, die hohen Temperaturen und/oder korrosiven Medien ausgesetzt sind.

Polysilane wurden erstmals von Kipping via Wurtz-Kupplung von Diphenyldichlorsilan mit Natrium dargestellt. Burkhard synthetisierte und charakterisierte im Jahre 1949 erstmals Dodekamethylcyclohexasilan. Letzteres wurde von Yajima et al. als Ausgangsmaterial zur Herstellung von SiC-Keramikfasern verwendet (S. Yajima et al., Chem. Lett. 1975, 931, 1209; 1976, 435). Zu diesem Zweck muss die Verbindung in einem Autoklaven unter Anwendung erhöhter Temperatur und Überdruck vernetzt werden, wobei Umwandlung in Polycarbosilan stattfindet (Kumada-Umlagerung). Nach Extraktion niedermolekularer Bestandteile wird ein unschmelzbares, hochmolekulares Polycarbosilan-Pulver gewonnen. Lösungen dieses Pulvers in Benzol oder Xylol können nach dem Trockenspinnprozess zu Grünfasern verarbeitet werden, die sich ohne vorhergehende Härtung zu SiC-Keramikfasern pyrolysieren lassen. Der wesentliche Nachteil dieses Verfahrens ist die aufwendige Synthese des Ausgangspolymers, die die Verwendung von Alkalimetallen, Reaktionen in Autoklaven und einen umständlichen Extraktionsprozess einschließt.

In einer Variante dieses Verfahrens (S. Yajima et al., Chem. Lett. 1976, 551; J. Mater. Sci. 13 (1978) 2569, 15 (1980) 720) wird auf die Anwendung hoher Drücke bei der Vernetzung und Umwandlung in Polycarbosilan verzichtet, was zu einem schmelzbaren Material führt. Dieses lässt sich nach dem Schmelzspinnverfahren zu Grünfasern verarbeiten, die dann jedoch vor der Pyrolyse durch Auslagerung an Luft bei erhöhter Temperatur gehärtet werden müssen. Die resultierenden Keramikfasern enthalten daher mehrere Masse-% Sauerstoff, was ihre Hochtemperaturstabilität erheblich beeinträchtigt (s.u.). Beide Verfahrensvarianten wurden patentiert, siehe US 4,100,233.

West et al. beschreiben die Synthese eines Phenylmethylpolysilans durch Wurtz-Kupplung einer Mischung von Phenylmethyl- und Dimethyldichlorsilan (US 4,260,780). Sharp et al., Mater. Res. 10 (1995) 2659, beschreiben die Synthese verzweigter Polysilane durch Wurtz-Kupplung von R₂SiCl₂/RSiCl₃-Gemischen (R = Methyl, Ethyl oder Phenyl). Das Spinnverhalten (Schmelzspinnverfahren) der erhaltenen Polymere wurde untersucht.

Zahlreiche andere Methoden zur Synthese von Polycarbosilanen wurden vorgeschlagen, z.B. die im Prinzip auf Arbeiten von Fritz aus der 50-er Jahren zurückgehende radikalische Vernetzung von Monsilanen bei hohen Temperaturen (siehe DE 22 36 078), die Kupplung von Vinylsilanen mit Chlorsilanen unter Verwendung von Alkalimetallen (US 4,414,403), die Hydrosilylierung von Vinylsilanen unter Verwendung von Pt-Katalysatoren ( B. Boury et al., Angew. Chem. 102 (1990) 818; Chem. Mater. 3 (1991) 487; Organometallics 10 (1991) 1457), sowie die Ringöffnungspolymerisation von 1,3-Disilacyclobutanderivaten mit Komplexen der Pt-Metalle als Katalysator (US 4,631,179; H.-J. Wu et al., Chem. Mater. 1 (1989) 564; 25 (1992) 1840). Die meisten dieser Syntheserouten haben nach Kenntnis der Erfinder keine technische Anwendung gefunden.

Zur Formstabilisierung der aus den Polycarbosilanen durch Schmelzspinnen gewonnenen Grünfasern ist in der Regel eine Härtung (curing) notwendig, um das Material vor der Pyrolyse unschmelzbar zu machen. In der Regel erfolgt diese Härtung durch Behandlung mit Reaktivgas. Die ursprünglich praktizierte Härtung mit Luft bei erhöhter Temperatur hat zum Nachteil einen erhöhten Sauerstoffeintrag in die Faser, was ihre Hochtemperaturstabilität stark beeinträchtigt (Faserschädigung durch Ausgasen von CO und/oder SiO bei hohen Temperaturen (T. Shimoo et al., J. Ceram. Soc. Jap., Int. Ed. 102 (1994) 952). Es hat daher nicht an Versuchen gefehlt, den Sauerstoffeintrag während der Grünfaserhärtung zu verringern.

Lipowitz (US 5,051,215) beschreibt die Grünfaserhärtung mit NO₂ anstelle von Luft; hierbei wird die Sauerstoffaufnahme von ca. 10-15 Masse-% (Lufthärtung) auf < 7 Masse-% verringert. Allerdings ist ein Mindest-Sauerstoffgehalt von 5-6 Masse-% erforderlich, um Verklebungen im Faserbündel zu vermeiden.

Alternativ zur Behandlung mit Reaktivgasen kommt auch eine Härtung durch Bestrahlung mit hochenergetischen Elektronen (M. Takeda et al., Ceram. Engng. Sci. Proc. 12 [7-8] (1991) 1007; 13 [7-8] (1992) 209; G. Chollon et al., J. Mater. Sci. 32 (1997) 893) oder Gammastrahlung ( K. Okamura et al., J. Mater. Sci. Lett. 4 (1985) 55) in Frage, bei der das Polymer offenbar radikalisch nachvernetzt wird. Bei letzterem Verfahren deuten die mitgeteilten Daten allerdings darauf hin, dass die Härtung ebenfalls durch Sauerstoffeintrag bewirkt wird. Ferner ist die Grünfaserhärtung durch Bestrahlung sehr kostenintensiv.

Baney et al. (EP 251 678 A2) beschreiben eine Methode zur Herstellung sauerstoffarmer SiC-Fasern ohne vorhergehende Grünfaserhärtung, indem einem Polycarbosilan durch Beimischung einer ungesättigten Verbindung (z.B. eines Polyolefins) sowie eines Hydrosilylierungskatalysators (einer Pt- oder Rh-Verbindung) intrinsische Reaktivität verliehen wird. Voraussetzung für dieses Verfahren ist, dass das Ausgangspolymer Si-H-Funktionen enthält.

Toreki et al. haben vorgeschlagen, schmelzbare Polycarbosilane nachträglich durch nachfolgende thermische Behandlung unschmelzbar zu machen, um sie nach dem Trockenspinnverfahren verarbeiten zu können (W. Toreki et al., Ceram. Engng. Sci. Proc. 11 (1992) 198; Am. Chem. Soc., Polym. Prepr. 32 (1991) 584; Mater. Lett. 11 (1991) 19). Sie gingen dabei allerdings wiederum von einem nur unter Mühen erhältlichen Ausgangsmaterial aus: Die seinerzeit von der Firma Hüls bezogenen Polydimethylsilane müssen aus Dimethyldichlorsilan und Alkalimetall hergestellt werden, einer sowohl verfahrens- als auch sicherheitstechnisch nicht unaufwendigen Methode. Die thermische Nachbehandlung muss wie beschrieben sehr genau kontrolliert werden, um Polycarbosilane (PCs) im gewünschten hohen Molekulargewichtsbereich zu erhalten, da PCs mit niedrigem Molekulargewicht zwar löslich sind, sich aber nicht ohne nachfolgenden Härtungsschritt zu Keramikfasern verarbeiten lassen, während PCs mit hohem Molekulargewicht die gewünschten Löslichkeitseigenschaften vermissen lassen. Die erhaltenen Polycarbosilan-Mischungen müssen demnach mehrere Lösungs-, Filtrations- und Einengungsschritte durchlaufen, um Lösungen mit den gewünschten rheologischen Eigenschaften zu erhalten.

Die Disproportionierung von Disilanen mit Lewis-Basen zu Mono- und Polysilanen wurde 1953 von Wilkins entdeckt. Die entsprechende Reaktion mit Methylchlordisilan-Gemischen aus der Müller-Rochow-Synthese wurde von Bluestein sowie von Cooper und Gilbert beschrieben. Eine nähere Untersuchung des bei der Disproportionierung entstehenden Polysilan-Rückstandes erfolgte durch Baney, siehe Organometallics 2 (1983) 859. Neben mehreren anderen Derivatisierungen beschrieb Baney auch die Herstellung von weitestgehend Cl-freiem Methylpolysilan bzw. Methylhydridopolysilan durch Umsetzung dieses Rückstandes mit Grignard-Verbindungen bzw. LiAlH₄ (US 4,298,559; US 4,310,482). Grünfasern, die aus einem solchen durch Grignard-Reaktion permethylierten Polysilan hergestellt wurden, müssen jedoch gehärtet werden (J. Lipowitz et al., Ceram. Engng. Sci. Proc. 9 [7-8] (1988) 931); allerdings werden hierzu keine näheren Angaben gemacht.

Roewer et al. untersuchten die Disproportionierung der Methylchlordisilane Cl₂MeSiSiMeCl₂, Cl₂MeSiSiMe₂Cl und ClMe₂SiSiMe₂Cl sowohl unter homogener als auch unter heterogener Katalyse. Im ersteren Fall wurden stickstoffhaltige Heterocyclen, vor allem N-Methylimidazol, im letzteren stickstoffhaltige Heterocyclen oder Bis(dimethylamino)-phosphorylgruppen eingesetzt, die an die Oberfläche eines Silicat-Trägers gebunden waren. Mehrere Oligosilane konnten im Produktgemisch identifiziert werden. Gemäß EP 0 610 809 A1 wird zwar auch eine thermische Nachbehandlung der Polysilane zu deren Umwandlung in Polycarbosilane offenbart; allerdings ist dieses glasartige Produkt zumindest bei relativ milder thermischer Behandlung (bis 220°C) wieder aufschmelzbar.

Auch die Herstellung von Siliciumcarbid-Fasern aus den so erhaltenen Polysilanen wurde beschrieben, z. B. in EP 668 254 B1. Da die Polysilane jedoch schmelzbar sind, müssen die Grünfasern vor der Pyrolyse mit Ammoniak bei erhöhter Temperatur gehärtet werden.

Anhand eines Materials, das durch heterogen katalysierte (Bisdimethylaminophosphoryl-Gruppen auf Silicatträger) Disproportionierung von reinem 1,1,2,2-Tetrachlordimethyldisilan gewonnen worden war, wurde gezeigt, dass auch Methylchlorpolysilane in einem Temperaturbereich zwischen 350 und 450 °C teilweise zu Polycarbosilanen umgelagert werden (R. Richter et al., Appl. Organomet. Chem. 11 (1997) 71). Gleichzeitig wird eine weitergehende Vernetzung unter Abspaltung Cl-haltiger Endgruppen beobachtet.

Aufgabe der Erfindung ist es, ein Verfahren für die Herstellung einer Polysilan-Polycarbosilan-Copolymerlösung bereitzustellen, aus der sich keramische Formkörper mit einer Zusammensetzung nahe SiC erzeugen lassen. Das Ausgangsmaterial für diese Lösung soll aus kostengünstigen Edukten auf einfache Weise zugänglich sein und sich sehr einfach in ein für das Trockenspinnen geeignetes Material umwandeln lassen, das nach der Formgebung ohne weitere Behandlung in das entsprechende keramische Material überführt werden kann.

Es wurde gefunden, dass die durch Disproportionierung von Methylchlordisilan-Gemischen, wie sie als hochsiedende Fraktion bei der Direktsynthese von Methylchlorsilanen (Müller-Rochow-Prozess (US 2,380,995 (1941); R. Müller, Wiss. Z. Techn. Univ. Dresden 12 (1963) 1633) anfallen, mit Lewis-Base-Katalysatoren erhältlichen Polysilane durch eine nachfolgende, gezielte thermische Behandlung in bequemer Weise so modifiziert werden können, dass sie zwar schwer- bzw. unschmelzbar, aber in indifferenten Lösemitteln noch hinreichend löslich sind, um in einem Formgebungsprozess weiter verarbeitet werden zu können. Lösungen dieser im folgenden als "Polysilan-Polycarbosilan-Copolymere" bezeichneten Materialien lassen sich z.B. zur Herstellung von Fasern nach dem Trockenspinnverfahren oder zum Aufbau keramischer Matrices nach dem Flüssigphasen-Infiltrationsverfahren verwenden. Polymerfasern, die aus diesen Lösungen erhältlich sind, lassen sich ohne weitere formstabilisierende Behandlung im Bündel verklebungsfrei zu sauerstoffarmen SiC-Keramikfasern pyrolysieren.

Als Ausgangsmaterial für die Polymerherstellung dienen Gemische aus Methylchlordisilanen mit der Zusammensetzung Si₂MeₙCl₆₋ₙ (n = 1-4), bevorzugt solche, die als hochsiedende Fraktion (Kp. 150-155 °C) bei der "Direktsynthese" nach Rochow und Müller anfallen. Letztere bestehen in der Regel aus einem Gemisch aus 1,1,2,2-Tetrachlor-dimethyldisilan und 1,1,2-Trichlortrimethyldisilan mit weniger als 10 mol-% anderen Bestandteilen. Die beiden genannten Disilane werden vorzugsweise in einem Molverhältnis zwischen 0,5 zu 1 bis 1,5 zu 1 vorgelegt.

Die erfindungsgemäße Herstellung des Roh-Polysilans erfolgt in Anlehnung an z.B. EP 610809 oder U. Herzog et al., Organomet. Chem. 507 (1996) 221 durch Disproportionierung der Disilan-Gemische unter homogener Katalyse mit einer Lewis-Base vorzugsweise bei erhöhter Temperatur, wobei die während der Reaktion als Spaltprodukte anfallenden Monosilan-Gemische kontinuierlich abdestilliert werden. Die Reaktionstemperatur beträgt vorzugsweise 150-300 °C, stärker bevorzugt 200-250 °C. Als Katalysator wird eine organische Stickstoffverbindung mit Lewis-Basizität eingesetzt. Bevorzugte Katalysatoren sind stickstoffhaltige Heterocyclen wie Pyridin, Chinolin, N-Methylpiperidin, N-Methylpyrrolidin, N-Methylindol, N,N'-Dimethylanilin, N,N'Dimethyltoluidin, 2,2'-Bipyridin, Phenanthrolin oder N-Methylimidazol. Die Menge an eingesetztem Katalysator beträgt bevorzugt 1 bis 2 Masse-%. Die Disproportionierung findet im übrigen unter den in der Literatur bekannten Bedingungen statt; insbesondere ist es günstig, Feuchtigkeit und Sauerstoff durch die Verwendung von Inertgas wie Stickstoffreinstgas von den Materialien fernzuhalten.

Als besonders vorteilhaft für die erfindungsgemäße Herstellung des Roh-Polysilans erweist sich der Zusatz eines VernetzungsHilfsmittels. Dieses Vernetzungs-Hilfsmittel kann ein Arylhalogensilan, ein Arylhalogenboran oder ein Gemisch dieser Verbindungen sein. Bevorzugt werden als Vernetzungs-Hilfsmittel Phenyltrichlorsilan, Diphenyldichlorsilan und Phenyldichlorboran eingesetzt, besonders bevorzugt Phenyltrichlorsilan. Die Menge an eingesetztem Vernetzungs-Hilfsmittel beträgt bevorzugt 5 bis 20 Masse-%, stärker bevorzugt 10 bis 15 Masse-%.

Das Roh-Polysilan wird erfindungsgemäß einer weitergehenden thermischen Behandlung unterzogen, bei der es einerseits durch Vergrößerung des mittleren Molekulargewichts schwer- bzw. unschmelzbar gemacht und andererseits durch die hierbei stattfindenden Umlagerungsreaktionen in ein Polysilan-Polycarbosilan-Copolymer überführt wird. Ein weiterer erfindungsgemäß beabsichtigter Effekt dieser thermischen Nachbehandlung ist die Verringerung des Gehaltes an chemisch gebundenem Chlor.

Die thermische Nachbehandlung findet in der Regel unter Atmosphärendruck statt, wobei es sehr empfehlenswert ist, unter Feuchtigkeits- und Sauerstoffausschluss zu arbeiten. Deshalb wird das Material günstigerweise unter Inertgas, in besonders vorteilhafter Weise unter Reinstickstoffatmosphäre behandelt, wobei man die Temperaturen auf zwischen 250° (oder nahe 300°) und 500 °C, bevorzugt zwischen 380 und 450 °C und ganz besonders bevorzugt zwischen 390 und 420 °C ansteigen lässt. Das Aufheizen erfolgt bevorzugt kontinuierlich, beispielsweise mit einer Geschwindigkeit von 1-5 K/min., vorzugsweise von 2-4 K/min. Während der Reaktion als Spaltprodukte anfallende niedermolekulare Methylchlorsilane werden kontinuierlich abdestilliert. Der Endpunkt der thermischen Nachbehandlung macht sich durch einen steilen Anstieg des Drehmoments am Rührwerk bemerkbar. Während der nachfolgenden Abkühlphase werden letzte Reste flüchtiger Bestandteile im Vakuum in einem Temperaturbereich um 100 °C entfernt. Das für die Herstellung der erfindungsgemäßen Polysilan-Polycarbosilan-Lösung erforderliche unschmelzbare, aber lösliche Copolymer lässt sich damit in einem einzigen Schritt herstellen, wobei in der Regel keine weiteren Trennschritte (Extraktionen, Filtrationen) mehr erforderlich sind. Günstig ist es auch, dass sich die Nachvernetzung direkt an die Disproportionierung anschließen kann.

Zur Herstellung der erfindungsgemäßen Polymerlösungen wird das Polysilan-Polycarbosilan-Copolymer in einem indifferenten organischen Lösemittel gelöst. Der Lösevorgang kann bei Raumtemperatur oder unter Erwärmen durchgeführt werden. Als Lösemittel kommen vor allem unpolare Lösemittel wie aliphatische Kohlenwasserstoffe (z.B. n-Pentan, n-Hexan, Cyclohexan, n-Heptan, n-Octan), aromatische Kohlenwasserstoffe (z.B. Benzol, Toluol, o-Xylol, sym-Mesitylen), halogenierte Kohlenwasserstoffe (z.B. Methylenchlorid, Chloroform, Tetrachlorkohlenstoff, 1,1,1-Trichlorethan, Chlorbenzol) oder Ether (z.B. Diethylether, Diisopropylether, Tetrahydrofuran, 1,4-Dioxan oder ein höherer oder nicht-symmetrischer Ether) in Frage. Das Lösemittel ist bevorzugt ein halogenierter oder halogenfreier Kohlenwasserstoff, besonders bevorzugt ein halogenfreier aromatischer Kohlenwasserstoff aus der Gruppe Benzol, Toluol, o-Xylol.

Der Mengenanteil des Polysilan-Polycarbosilan-Copolymers in der Polymerlösung kann je nach dem Verwendungszweck der Lösung eingestellt werden. Dient die Lösung der Herstellung von Fasern nach dem Trockenspinnverfahren, sind Polymeranteile von 50-90 Masse-%, bevorzugt 60-70 Masse-% vorteilhaft. Dient die Lösung der Herstellung keramischer Matrices nach dem Flüssigphasen-Infiltrationsverfahren, so kann der Polymeranteil aufgrund der erforderlichen niedrigen Viskosität deutlich niedriger, z.B. 20 Masse-%, gewählt werden.

Zur erfindungsgemäßen Anwendung der Polymerlösung für die Faserherstellung nach dem Trockenspinnverfahren ist es häufig notwendig, zumindest aber meist hilfreich, zur Einstellung der erforderlichen viskoelastischen Eigenschaften ein Spinnhilfsmittel zuzusetzen. Als Spinnhilfsmittel kommen organische, in dem jeweiligen Lösemittel lösliche Polymere in Frage, beispielsweise Polyethylen, Polypropylen, Polystyrol, Polyvinylchlorid, Polyacrylnitril oder Poly(4-vinylpyridin). Das bevorzugte Spinnhilfsmittel ist Polystyrol; der Mengenanteil kann bis zu 10% betragen und liegt bevorzugt zwischen 1 und 5 Masse-%, besonders bevorzugt bei 2 Masse-%.

Im Folgenden wird die Herstellung von SiC-Keramikfasern aus den erfindungsgemäßen Polymerlösungen beschrieben, ohne dass darin eine Einschränkung der Anwendungsmöglichkeiten dieser Lösung zu sehen ist.

Die Herstellung von Polymerfasern erfolgt nach dem Trockenspinnverfahren; dieses ist Stand der Technik (F. Fourné, "Synthetische Fasern", Carl Hauser Verlag 1995, S. 183; V.B. Gupta, V.K. Kothari (Hrsg.), "Manufactured Fiber Technology", Chapman & Hall 1997, S. 126). Bevorzugte Parameter für den Spinnprozess sind die Verwendung eines Düsenpakets mit Düsen vom Durchmesser 75 bis 300 µm und einer Kapillarlänge von 0,2 bis 0,5 mm. Die Schachttemperatur kann 20 bis 100 °C, insbesondere 20 bis 50 °C bei einer Länge von 2 m und die Abzugsgeschwindigkeit kann 20 bis 500m/min, stärker bevorzugt 100 bis 300 m/min betragen.

Die erfindungsgemäßen Polymerfasern können ohne vorhergehende formstabilisierende Behandlung pyrolysiert werden. Die bevorzugten Parameter für die Pyrolyse sind eine Aufheizgeschwindigkeit zwischen 1 und 50 K/min, eher zwischen 5 und 50 K/min, und eine Endtemperatur von 900 bis 1200 °C. Die Pyrolyse kann unter inerter (N₂, Argon) oder reduzierender (Argon/H₂, N₂/CO etc.) Atmosphäre erfolgen. Die bevorzugte Atmosphäre für die Pyrolyse ist Stickstoff oder Formiergas (Argon mit 10 Vol.-% H₂). Als Ofen ist beispielsweise ein elektrischer Ofen geeignet.

Nach der Pyrolyse können die Keramikfasern einer weiteren thermischen Behandlung unterzogen werden, die zu ihrer Verdichtung und teilweisen Kristallisation führt und ihre mechanischen Festigkeiten verbessert. So können die Fasern bei Temperaturen von 1200-2000°C unter inerter (N₂,Ar) oder reduzierender (Ar/H₂, N₂/CO o.ä.) Atmosphäre gesintert werden.

Durch die erfindungsgemäße Pyrolyse und Sinterung der Grünfasern lassen sich z.B. sauerstoffarme Keramikfasern mit einem Faserdurchmesser zwischen 5 und 50µm erzeugen, deren Zugfestigkeit oberhalb 500 MPa und deren Elastizitätsmodul oberhalb von 120 GPa liegt. Die chemische Zusammensetzung dieser Fasern kann die folgende sein: 30-60 At.-% Si, 40-70 At.-% C, Sauerstoffgehalt < 1 Masse-% und Borgehalt zwischen 0 und 10 At.-%. Diese Keramikfasern können als Verstärkungselemente in Ceramic Matrix Composites (MCM) eingesetzt werden.

Die folgenden Beispiele dienen der näheren Beschreibung und Illustration der Erfindung, ohne dass in ihnen eine Einschränkung des Anwendungsbereiches zu sehen ist.

### Beispiel 1: Herstellung eines Polysilans

600 g eines Methylchlordisilan-Gemischs ("Disilan-Fraktion" aus dem Müller-Rochow-Prozess, bestehend aus 50 mol-% Cl₂MeSiSiMeCl₂ und 50 mol-% Cl₂MeSiSiMe₂Cl; Kp. 150-155 °C) werden mit 14 g N-Methylimidazol und 69 g Phenyltrichlorsilan versetzt und mit 0,5 K/min auf 220 °C erhitzt. Hierbei werden 450 ml eines Destillats erhalten, das aus 56 mol-% MeSiCl₃, 41 mol-% Me₂SiCl₂, 1 mol-% Me₃SiCl sowie 2 mol-% höheren Methylchlorsilanen besteht, sowie 153 g eines dunkelbraunen, bei Raumtemperatur festen, hydrolyseempfindlichen Polysilans.

### Beispiel 2: Herstellung eines Polysilan-Polycarbosilan-Copolymers

151 g eines Polysilans gemäß Beispiel 1 werden in einem Rundkolben mit 3 K/min auf 400 °C erhitzt und 50 min auf dieser Temperatur gehalten. Beim anschließenden Abkühlen wird die Temperatur 1 h lang auf 100 °C gehalten und währenddessen letzte Reste flüchtiger Bestandteile durch Anlegen von Vakuum abgezogen. Es werden 16 ml eines gelben Destillats erhalten, das aus verschiedenen Mono-, Di- und Oligo-methylchlorsilanen besteht, sowie 108,5 g eines dunkelbraunen Polysilan-Polycarbosilan-Copolymers.

### Beispiel 3: Herstellung von Polysilan-Polycarbosilan-Copolymer-Grünfasern

35 g des Copolymers gemäß Beispiel 2 werden in 40 ml Toluol unter Erhitzen auf 110 °C gelöst und mit einer Lösung von 1 g Polystyrol in 11 ml Toluol versetzt. Durch Abziehen von Toluol im Vakuum wird die Viskosität der Lösung auf 2 Pa·s eingestellt. Die so erhaltene Spinnmasse wird unter Inertbedingungen (Glovebox) in eine Spinnapparatur gefüllt, die aus einem Stahlzylinder mit einer Düsenplatte an der Unterseite und einem eingepassten, über einen Elektromotor vertikal beweglichen Stempel besteht. Durch Vorschub des Stempels wird die Spinnmasse in Strangform durch die Düsen (∅ 150 µm, l = 0,45 mm) extrudiert. Die Polymerfäden werden, nachdem sie durch einen auf 40 °C beheizten Schacht gefallen sind, auf einer Galette aufgewickelt. Das Lösemittel verdunstet im Spinnschacht, und über die Drehgeschwindigkeit der Galette kann der Verzug kontinuierlich variiert werden. Bei einer Abzugsgeschwindigkeit von 175 m/min werden Grünfasern mit einem 0 von 30 µm erhalten.

### Beispiel 4: Herstellung von SiC-Keramikfasern

Die gemäß Beispiel 3 hergestellten Grünfasern werden in einem senkrecht stehenden Rohrofen unter Intertgasatmosphäre (N₂) mit einer Geschwindigkeit von 12 K/min bis zu einer Endtemperatur von 1200 °C pyrolysiert. Man erhält schwarze, glänzende Fasern mit einem Sauerstoffgehalt von 0,6-0,8 Masse-%, einem Durchmesser von 22-25 µm, einer Zugfestigkeit von 500-600 MPa und einem Elastizitätsmodul von 110-130 GPa. Die Fasern sind noch relativ dick und zeigen auf Bruchbildern meist nierenförmige Querschnitte. Diese Fehler lassen sich künftig durch verbesserte Spinnparameter beheben, was die Zugfestigkeit der Fasern erheblich steigern dürfte. Steigerungen des Elastizitätsmoduls sind durch Sintern der Fasern bei hohen Temperaturen möglich.

## Patentansprüche

1. Verfahren zur Herstellung einer Polysilan-Polycarbosilan-Copolymer-Lösung, insbesondere zur Faserherstellung oder zum Aufbau keramischer Matrices, umfassend
(1) die Bereitstellung eines Polysilans, erhalten durch Disproportionierung eines oder eines Gemischs mehrerer Methylchlordisilane der Zusammensetzung Si₂MeₙCl₆₋ₙ, worin n = 1 bis 4 ist, mit einer Lewis-Base als Katalysator,
(2) eine thermische Nachvernetzung des Polysilans gemäß (1) zu einem unschmelzbaren, in indifferenten Lösemitteln löslichen Polysilan-Polycarbosilan-Copolymer, sowie
(3) die Herstellung der genannten Lösung durch Lösen des Polysilan-Polycarbosilan-Copolymers in einem indifferenten Lösemittel.

2. Verfahren nach Anspruch 1, umfassend
die Herstellung des Polysilans gemäß (1) durch Disproportionierung eines oder eines Gemischs mehrerer Methylchlordisilane der Zusammensetzung Si₂MeₙCl₆₋ₙ mit einer Lewis-Base als Katalysator.

3. Verfahren nach Anspruch 1 oder 2, **dadurch gekennzeichnet, dass** das Polysilan unter Zusatz eines Vernetzungshilfsmittels gewonnen wurde bzw. wird.

4. Verfahren nach einem der Ansprüche 1 bis 3, **dadurch gekennzeichnet, dass** die Herstellung der genannten Lösung unter Zusatz eines organischen Polymers als Spinnhilfsmittel erfolgt.

5. Verfahren nach einem der voranstehenden Ansprüche, **dadurch gekennzeichnet, dass** das Methylchlordisilan-Gemisch aus Cl₂MeSiSiMeCl₂ und Cl₂MeSiSiMe₂Cl in einem Mol-Verhältnis von 0,5 bis 1,5 mit weniger als 10 mol-% anderen Bestandteilen besteht.

6. Verfahren nach einem der voranstehenden Ansprüche, **dadurch gekennzeichnet, dass** als Katalysator mindestens eine der Verbindungen aus der Gruppe N,N'-Dimethylanilin, N,N'-Dimethyltoluidin, Pyridin, 2,2'-Bipyridin, Phenanthrolin, Chinolin, N-Methylpiperidin, N-Methylpyrrolidin, N-Methylindol oder N-Methylimidazol eingesetzt wird.

7. Verfahren nach einem der voranstehenden Ansprüche, **dadurch gekennzeichnet, dass** als Vernetzungshilfsmittel Phenyltrichlorsilan und/oder Phenyldichlorboran eingesetzt wird.

8. Verfahren nach einem der voranstehenden Ansprüche, **dadurch gekennzeichnet, dass** der Anteil des Vernetzungshilfsmittels zwischen 5 und 20 Masse-% liegt.

9. Verfahren nach einem der voranstehenden Ansprüche, **dadurch gekennzeichnet, dass** die thermische Nachvernetzung bei Temperaturen von 250 bis 500 °C erfolgt.

10. Verfahren nach einem der voranstehenden Ansprüche, **dadurch gekennzeichnet, dass** als Lösemittel ein gesättigter Kohlenwasserstoff aus der Gruppe n-Pentan, n-Hexan, Cyclohexan, n-Heptan, n-Octan, ein aromatischer Kohlenwasserstoff aus der Gruppe Benzol, Toluol, o-Xylol, sym-Mesitylen, ein Chlorkohlenwasserstoff aus der Gruppe Methylenchlorid, Chloroform, Tetrachlorkohlenstoff, 1,1,1-Trichlorethan, Chlorbenzol, oder ein Ether aus der Gruppe Diethylether, Diisopropylether, Tetrahydrofuran, 1,4-Dioxan oder eine Mischung von zweien oder mehr dieser Lösemittel eingesetzt wird.

11. Verfahren nach einem der voranstehenden Ansprüche, **dadurch gekennzeichnet, dass** als Spinnhilfsmittel ein organisches Polymer aus der Gruppe Polyethylen, Polypropylen, Polystyrol, Polyvinylchlorid, Polyacrylnitril, Poly(4-vinylpyridin) eingesetzt wird.

12. Verfahren nach einem der voranstehenden Ansprüche, **dadurch gekennzeichnet, dass** der Masseanteil des Polysilan-Polycarbosilan-Copolymers in der Lösung zwischen 30 und 95 % und der Masseanteil des Spinnhilfsmittels zwischen 0 und 10 % liegt.

13. Verfahren zur Herstellung von sauerstoffarmen Keramikfasern mit einer Zusammensetzung nahe SiC, umfassend die Schritte:
(1) Herstellen einer Polysilan-Polycarbosilan-Copolymer-Lösung gemäß Anspruch 1
(2) Verspinnen dieser Lösung zu Grünfasern nach dem Trockenspinnverfahren,
(3) Pyrolyse der getrockneten Grünfasern aus Schritt (2) unter Inertgasatmosphäre oder reduzierender Atmosphäre.

14. Verfahren nach Anspruch 13, **dadurch gekennzeichnet, dass** der Trockenspinnprozess bei einer Temperatur von 20 bis 100 °C mit einer Abzugsgeschwindigkeit von 20 bis 500 m/min durchgeführt wird.

15. Verfahren nach einem der Ansprüche 13 oder 14, **dadurch gekennzeichnet, dass** die Pyrolyse der Grünfasern bei Endtemperaturen von 900 bis 1200 °C mit einer Aufheizgeschwindigkeit von 1 bis 50 K/min in inerter (N₂, Ar) oder reduzierender (Ar/H₂, N₂/CO) Atmosphäre durchgeführt wird.

16. Verfahren nach einem der Ansprüche 13 bis 15, **dadurch gekennzeichnet, dass** die erhaltenen Keramikfasern bei Temperaturen von 1200-2000 °C unter inerter (N₂, Ar) oder reduzierender (Ar/H₂, N₂/CO) Atmosphäre gesintert werden.

17. Sauerstoffarme Keramikfasern, hergestellt nach dem Verfahren der Ansprüche 13 bis 16.

18. Sauerstoffarme Keramikfasern nach Anspruch 17, **dadurch gekennzeichnet, dass** der Faserdurchmesser zwischen 5 und 50 µm, die Zugfestigkeit oberhalb 500 MPa und der Elastizitätsmodul oberhalb 120 GPa liegt.

19. Sauerstoffarme Keramikfasern nach einem der Ansprüche 17 oder 18, **dadurch gekennzeichnet, dass** der Si-Gehalt zwischen 30 und 60 At.-%, der C-Gehalt zwischen 40 und 70 At.-%, der Sauerstoffgehalt < 1 Masse-% und der Bor-Gehalt zwischen 0 und 10 At.-% beträgt.

20. Polysilan-Polycarbosilan-Copolymer-Lösung, erhalten nach dem Verfahren gemäß einem der Ansprüche 1 bis 12.

21. Verwendung der Polymerlösungen gemäß Anspruch 20 zum Aufbau keramischer Matrices durch Flüssigphasen-Infiltration.

22. Verwendung der Keramikfasern gemäß einem der Ansprüche 17 bis 19 als Verstärkungselemente in Ceramic Matrix Composites (CMC).

## Claims

1. Method for preparing a polysilane-polycarbosilane copolymer solution, especially for preparing fibers or for building up ceramic matrices, comprising
(1) the provision of a polysilane, obtained by the disproportionation of a methylchlorodisilane or of a mixture of a plurality of methylchlorodisilanes of the composition of Si₂MeₙCl₆₋ₙ, wherein ₙ is 1 to 4, with a Lewis base as a catalyst,
(2) a subsequent thermal crosslinking of the polysilane according to (1) into an infusible polysilane-polycarbosilane copolymer soluble in inert solvents, as well as
(3) the preparation of the said solution by dissolving the polysilane-polycarbosilane copolymer in an inert solvent.

2. Method in accordance with claim 1, comprising
the preparation of the polysilane according to (1) by the disproportionation of a methylchlorodisilane or of a mixture of a plurality of methylchlorodisilanes of the composition Si₂MeₙCl₆₋ₙ with a Lewis base as the catalyst.

3. Method in accordance with claim 1 or 2, **characterized in that** the polysilane was or is obtained by adding a crosslinking aid.

4. Method in accordance with any of the claims 1 through 3, **characterized in that** the said solution is prepared, while an organic polymer is added as a spinning aid.

5. Method in accordance with any of the preceding claims, **characterized in that** the methylchlorodisilane mixture consists of Cl₂MeSiSiMeCl₂ and Cl₂MeSiSiMe₂Cl at a molar ratio of 0.5 to 1.5 with less than 10 mol.% of other components.

6. Method in accordance with any of the preceding claims, **characterized in that** at least one of the compounds from the group comprising N,N'-dimethylaniline, N,N'-dimethyltoluidine, pyridine, 2,2'-bipyridine, phenanthroline, quinoline, N-methylpiperidine, N-methylpyrrolidine, N-methylindole or N-methylimidazole is used as the catalyst.

7. Method in accordance with any of the preceding claims, **characterized in that** phenyltrichlorosilane and/or phenyldichloroborane is used as a crosslinking aid.

8. Method in accordance with any of the preceding claims, **characterized in that** the percentage of the crosslinking aid is between 5 mass % and 20 mass %.

9. Method in accordance with any of the preceding claims, **characterized in that** the subsequent thermal crosslinking is carried out at temperatures of 250°C to 500°C.

10. Method in accordance with any of the preceding claims, **characterized in that** a saturated hydrocarbon from the group comprising n-pentane, n-hexane, cyclohexane, n-heptane, n-octane, an aromatic hydrocarbon from the group comprising benzene, toluene, o-xylene, sym.-mesitylene, a chlorinated hydrocarbon from the group comprising methylene chloride, chloroform, carbon tetrachloride, 1,1,1-trichloroethane, chlorobenzene, or an ether from the group comprising diethyl ether, diisopropyl ether, tetrahydrofuran, 1,4-dioxane or a mixture of two or more of these solvents is used as the solvent.

11. Method in accordance with any of the preceding claims, **characterized in that** an organic polymer from the group comprising polyethylene, polypropylene, polystyrene, polyvinyl chloride, polyacrylonitrile, poly(4-vinylpyridine) is used as the spinning aid.

12. Method in accordance with any of the preceding claims, **characterized in that** the quantity of the polysilane-polycarbosilane copolymer in the solution is between 30 mass % and 95 mass % and the quantity of the spinning aid is between 0 mass % and 10 mass %.

13. Method for preparing oxygen-depleted ceramic fibers with a composition in the vicinity of SiC, comprising the steps:
(1) preparation of a polysilane-polycarbosilane copolymer solution in accordance with claim 1,
(2) spinning of this solution into green fibers according to the dry spinning method, and
(3) pyrolysis of the dried green fibers from step (2) under an inert gas atmosphere or reducing atmosphere.

14. Method in accordance with claim 13, **characterized in that** the dry spinning process is carried out at a temperature of 20°C to 100°C at a pull-off velocity of 20 to 500 m/min.

15. Method in accordance with any of claims 13 or 14, **characterized in that** the pyrolysis of the green fibers is carried out at a final temperature of 900°C to 1.200°C at a heating rate of 1 K to 50 K/min. under an inert (N₂, Ar) or reducing (Ar/H₂, N₂/CO) atmosphere.

16. Method in accordance with any of claims 13 through 15, **characterized in that** the ceramic fibers thus obtained are sintered at temperatures of 1.200-2.000°C under an inert (N₂, Ar) or reducing (Ar/H₂, N₂/CO) atmosphere.

17. Oxygen-depleted ceramic fibers, prepared according to the method in accordance with claims 13 through 16.

18. Oxygen-depleted ceramic fibers in accordance with claim 17, **characterized in that** the fiber diameter is between 5 and 50 µm, the tensile strength is above 500 MPa and the modulus of elasticity is above 120 GPa.

19. Oxygen-depleted ceramic fibers in accordance with any of claims 17 or 18, **characterized in that** the Si content is between 30 and 60 at.%, the C content is between 40 and 70 at.%, the oxygen content is <1 mass %, and the boron content is between 0 and 10 at.%.

20. Polysilane-polycarbosilane copolymer solution, obtained according to the method as claimed in any of the claims 1 through 12.

21. Use of the polymer solutions in accordance with claim 20 to build up ceramic matrices by liquid-phase infiltration.

22. Use of the ceramic fibers in accordance with any of the claims 17 through 19 as reinforcing elements in ceramic matrix composites (CMC).

## Revendications

1. Procédé pour la préparation d'une solution de copolymère polysilane-polycarbosilane, en particulier pour la production de fibres ou pour la constitution de matrices céramiques, comprenant
(1) la fourniture d'un polysilane obtenu par disproportionation d'un ou d'un mélange de plusieurs silanes de chlorure de méthyle de la composition Si₂MeₙCl₆₋ₙ, dans laquelle n = 1 à 4, avec une base de Lewis à titre de catalyseur,
(2) une post-réticulation thermique du polysilane selon (1) en un copolymère polysilane-polycarbosilane infusible soluble dans des solvants indifférents, ainsi que
(3) la préparation de ladite solution par dissolution du copolymère polysilane-polycarbosilane dans un solvant indifférent.

2. Procédé selon la revendication 1, comprenant
la préparation du polysilane selon (1) par la disproportionation d'un ou d'un mélange de plusieurs silanes de chlorure de méthyle de la composition Si₂MeₙCl₆₋ₙ avec une base de Lewis à titre de catalyseur.

3. Procédé selon la revendication 1 ou 2, **caractérisé en ce que** le polysilane est ou a été obtenu par addition d'un agent auxiliaire de réticulation.

4. Procédé selon l'une des revendications 1 à 3, **caractérisé en ce que** la préparation de ladite solution s'effectue par addition d'un polymère organique à titre d'agent auxiliaire de filage.

5. Procédé selon l'une des revendications précédentes, **caractérisé en ce que** le mélange de silane de chlorure de méthyle à partir de Cl₂MeSiSiMeCl₂ et de Cl₂MeSiSiMe₂Cl est constitué en un rapport molaire de 0,5 à 1,5 avec moins de 10 %mole d'autres composantes.

6. Procédé selon l'une des revendications précédentes, **caractérisé en ce que** l'on utilise à titre de catalyseur l'un au moins des composés parmi le groupe comprenant N,N'-diméthylaniline, N,N'-diméthyltoluidine, pyridine, 2,2'-bipyridine, phénanthroline, chinoline, N-méthylpipéridine, N-méthylpyrrolidine, N-méthylindole ou N-méthylimidazole.

7. Procédé selon l'une des revendications précédentes, **caractérisé en ce que** l'on utilise à titre d'agent auxiliaire de réticulation du phényltrichlorosilane et/ou du phényldichloroborane.

8. Procédé selon l'une des revendications précédentes, **caractérisé en ce que** la part en agent auxiliaire de réticulation est comprise entre 5 et 20 % en masse.

9. Procédé selon l'une des revendications précédentes, **caractérisé en ce que** la post-réticulation thermique s'effectue à des températures de 250 à 500 °C.

10. Procédé selon l'une des revendications précédentes, **caractérisé en ce que** l'on utilise à titre de solvant un hydrocarbure saturé parmi le groupe comprenant n-pentane, n-hexane, cyclohexane, n-heptane, n-octane, un hydrocarbure aromatique parmi le groupe comprenant benzène, toluène, o-xylène, sym-mésitylène, un hydrocarbure chloré parmi le groupe comprenant chlorure de méthyle, chloroforme, tétrachlorure de carbone, 1,1,1-trichloréthane, chlorobenzène, ou un éther parmi le groupe comprenant diéthyléther, diisopropyléther, tétrahydrofurane, 1,4-dioxane ou un mélange de deux ou de plusieurs de ces solvants.

11. Procédé selon l'une des revendications précédentes, **caractérisé en ce que** l'on utilise à titre d'agent auxiliaire de filage un polymère organique parmi le groupe comprenant polyéthylène, polypropylène, polystyrène, chlorure de polyvinyle, polyacrylonitrile, poly(4-vinylpyridine).

12. Procédé selon l'une des revendications précédentes, **caractérisé en ce que** la part en masse du copolymère polysilane-polycarbosilane dans la solution est comprise entre 30 et 95 % et la part en masse de l'agent auxiliaire de filage est comprise entre 0 et 10 %.

13. Procédé de production de fibres céramiques pauvres en oxygène avec une composition proche de SiC, comprenant les étapes suivantes:
(1) préparer une solution de copolymère polysilane-polycarbosilane selon la revendication 1,
(2) filer cette solution en fibres vertes selon le procédé de filage à sec,
(3) la pyrolyse des fibres vertes séchées de l'étape (2) dans une atmosphère de gaz inerte ou dans une atmosphère réductrice.

14. Procédé selon la revendication 13, **caractérisé en ce que** le processus de filage à sec s'effectue à une température de 20 à 100 °C à une vitesse de tirage de 20 à 500 m/min.

15. Procédé selon l'une des revendications 13 ou 14, **caractérisé en ce que** la pyrolyse des fibres vertes s'effectue à des températures finales de 900 à 1200 °C à une vitesse de chauffage de 1 à 50 K/min dans une atmosphère inerte (N₂, Ar) ou réductrice (Ar/H₂, N₂/CO ou similaire).

16. Procédé selon l'une des revendications 13 à 15, **caractérisé en ce que** les fibres céramiques obtenues sont frittées à des températures de 1200-2000 °C dans une atmosphère inerte (N₂, Ar) ou réductrice (Ar/H₂, N₂/CO).

17. Fibres céramiques pauvres en oxygène, produites selon le procédé des revendications 13 à 16.

18. Fibres céramiques pauvres en oxygène selon la revendication 17, **caractérisées en ce que** le diamètre des fibres est compris entre 5 et 50 µm, la résistance à la traction est supérieure à 500 MPa et le module d'élasticité est supérieur à 120 GPa.

19. Fibres céramiques pauvres en oxygène selon l'une des revendications 17 ou 18, **caractérisées en ce que** la teneur en Si est comprise entre 30 et 60 %atome, la teneur en C est comprise entre 40 et 70 %atome, la teneur en oxygène est < 1 % en masse et la teneur en bore est comprise entre 0 et 10 %atome.

20. Solution de copolymère polysilane-polycarbosilane, obtenue par le procédé selon l'une des revendications 1 à 12.

21. Utilisation des solutions de polymère selon la revendication 20 pour constituer des matrices céramiques par infiltration en phase liquide.

22. Utilisation des fibres céramiques selon l'une des revendications 17 à 19 à titre d'éléments de renforcement dans des composites à matrice céramique (CMC).
